# FASCICULE DE BREVET EUROPEEN

(11) **EP 3 263 849 B1**
(45) Date de publication et mention de la délivrance du brevet: **05.08.2020**
(21) Numéro de dépôt: 17169161.1
(22) Date de dépôt: 03.05.2017
(51) Int. Cl.: F01D 25/00, F02K 3/06, F02C 3/30

(54) **AÉRONEF COMPRENANT UN SYSTÈME DE PROPULSION**
LUFTFAHRZEUG MIT EINEM ANTRIEBSSYSTEM
AIRCRAFT COMPRISING A PROPULSION SYSTEM

(30) Priorité: 28.06.2016 BE 201605486
(43) Date de publication de la demande: 03.01.2018
(73) Titulaire: Safran Aero Boosters SA, 4041 Herstal (BE)
(72) Inventeur: DELADRIERE, Mathieu, 4040 Herstal (BE)
(74) Mandataire: Gevers Patents

(56) Documents cités:
- BE-A- 525 244
- FR-A- 995 131
- GB-A- 703 619
- US-A- 2 686 631
- US-A- 2 974 482
- US-A1- 2009 188 031
- US-A1- 2012 134 777

## Description

### Domaine technique

Selon un premier aspect, la présente invention concerne un aéronef comprenant un système de nettoyage pour au moins une de ses turbomachines. Selon un deuxième aspect, l'invention concerne une méthode de nettoyage de turbomachine d'aéronef. Selon un troisième aspect, l'invention concerne une méthode de dégivrage de turbomachine.

### Art antérieur

Les turbomachines d'aéronefs se salissent à cause de la pollution atmosphérique et de la combustion. En particulier, la pollution atmosphérique et la combustion polluent les surfaces du flux primaire entraînant une augmentation de la température EGT (température des gaz d'échappement) pour atteindre une poussée donnée, ou inversement, une poussée réduite pour une EGT donnée.

Le document EP2966265 A1 divulgue un système de nettoyage pour turbomachine d'aéronef. Un problème de ce système est que son utilisation nécessite que l'avion soit à l'arrêt.

Le document BE525244 A divulgue un système de propulsion pour aéronef comprenant un dispositif d'injection de liquide dans le flux primaire.

Le document GB703619 A divulgue un moteur pour aéronef couplé avec un dispositif d'injection de liquide pour augmenter la puissance fournie par le moteur.

### Résumé de l'invention

Selon un premier aspect, un des buts de l'invention est de fournir un aéronef pourvu d'un système de propulsion incluant une turbomachine et permettant un nettoyage précis et contrôlé de celle-ci, notamment en vol. A cet effet, l'invention propose un aéronef comprenant un système de propulsion qui comprend:
- une turbomachine double flux comprenant :
   ∘ une entrée pour recevoir de l'air,
   ∘ une sortie pour expulser de l'air,
   ∘ un séparateur annulaire pour obtenir entre l'entrée et la sortie un premier passage pour un flux primaire d'air et un deuxième passage concentrique externe au premier passage pour un flux secondaire d'air, et
   ∘ un compresseur basse pression situé dans le premier passage pour comprimer le flux primaire d'air;
   • un pulvérisateur de liquide aqueux comprenant une première sortie de pulvérisation située entre l'entrée de la turbomachine et le compresseur basse pression dans le premier passage pour y injecter un liquide aqueux;
- des premiers moyens de fixation fixant le pulvérisateur à l'intérieur de la turbomachine ;
- un réservoir pour contenir le liquide aqueux et logé et fixé dans l'aéronef;
- des deuxièmes moyens de fixation fixant le réservoir dans l'aéronef;
- une conduite connectant de manière fluidique le réservoir au pulvérisateur;
une unité de contrôle pour contrôler un débit de fluide aqueux pulvérisé par le pulvérisateur et un moyen de chauffage pour chauffer le liquide aqueux dans la turbomachine.

Le système de propulsion pour aéronef selon l'invention comprend un système de nettoyage de turbomachine d'aéronef. En effet, le liquide aqueux présent dans le réservoir logé et fixé dans l'aéronef passe dans la conduite, puis est injecté dans le compresseur basse pression par le pulvérisateur. Là, le liquide aqueux nettoie le compresseur basse pression. Il peut aussi éventuellement nettoyer des éléments de la turbomachine en aval du compresseur basse pression dans le premier passage, qui correspond au flux primaire.

De plus, le fait que le réservoir, la conduite et le pulvérisateur soient fixés à l'aéronef permet que le nettoyage soit fait durant les périodes de taxi de l'aéronef et en vol. Le nettoyage ne nécessite donc pas de garder l'aéronef immobilisé.

Le système de propulsion selon l'invention permet un nettoyage particulièrement précis des surfaces du flux primaire, c'est-à-dire des surfaces de tous les éléments de la turbomachine présentes dans le flux primaire, car la première sortie de pulvérisation injecte du liquide aqueux dans le premier passage. Le nettoyage consomme donc aussi particulièrement peu de liquide aqueux.

En outre, le nettoyage fourni par le système de propulsion selon l'invention est particulièrement bien contrôlé grâce à l'unité de contrôle. Le moment du nettoyage, sa durée, la pression du liquide aqueux peuvent ainsi être contrôlés.

Le système de propulsion peut être appelé "premier système de propulsion".

Le réservoir comprend préférentiellement une réserve de liquide aqueux suffisante pour plusieurs nettoyages. Le réservoir peut comprendre entre 50 et 10000 litres de liquide aqueux, préférentiellement entre 100 et 1000 litres de liquide aqueux. Le réservoir est préférentiellement rempli régulièrement, à des moments adéquats par rapport au planning de vol de l'aéronef. Ensuite, le réservoir est vidé petit à petit au fur et à mesure des nettoyages, au sol (par exemple lors des taxis) ou en vol, lorsqu'un nettoyage est utile. Un nettoyage peut par exemple consommer entre 60 et 80 litres de liquide aqueux.

La première sortie de pulvérisation comprend préférentiellement des trous dirigés vers la sortie, et ayant plus préférentiellement un diamètre entre 5 et 10 mm. Il permet préférentiellement d'éjecter le liquide aqueux sous pression. Il peut permettre d'éjecter le liquide aqueux sous forme de gouttelettes. Il peut comprendre un spray et/ou des buses d'injection.

Le liquide aqueux est préférentiellement une solution aqueuse. Le liquide aqueux peut par exemple être de l'eau, du liquide de nettoyage, être un mélange air/eau, peut comprendre une grande quantité d'air dissous ou de bulles d'air (par exemple au moins 10% d'air et de présence au moins 30%), peut comprendre un liquide de dégivrage (par exemple pour améliorer sa fonction de dégivrage). Le liquide aqueux ne comprend préférentiellement pas d'huile ou de lubrifiant organique.

Dans le cadre du présent document, des "moyens de fixations" sont des moyens de fixation à long terme, prévus pour fixer ensemble des éléments en une position relative fixe pendant des semaines, des mois ou des années. Ils peuvent comprendre par exemple des vis, des boulons, des écrous, ou de la colle.

La conduite est préférentiellement fixée, par des quatrièmes moyens de fixation, à au moins un de: l'aéronef, le réservoir et le séparateur annulaire.

Le pulvérisateur est préférentiellement fixé au séparateur annulaire par les premiers moyens de fixation.

Préférentiellement, le pulvérisateur comprend une pompe. Dans une réalisation de l'invention, le système de propulsion comprend une pompe agissant sur le liquide aqueux du réservoir et/ou de la conduite. Dans une réalisation de l'invention, l'unité de contrôle contrôle la pompe.

Le séparateur annulaire est parfois dénommé "splitter".

Dans une réalisation de l'invention, le réservoir est fixé dans ou à la turbomachine par l'intermédiaire des deuxièmes moyens de fixation.

Dans une réalisation de l'invention, le réservoir est connecté fluidiquement à une entrée agencée pour permettre une introduction de liquide aqueux depuis l'extérieur de l'aéronef. Cela permet que le réservoir soit facilement et abondamment alimenté en liquide aqueux lorsque l'aéronef est à l'arrêt. Ensuite, lorsque l'aéronef est en taxi ou en vol, le réservoir alimente le pulvérisateur afin de nettoyer la turbomachine. La connection entre le réservoir et cette entrée se fait de préférence par un conduit direct. Il n'y a donc pas de pompe par exemple entre l'entrée et le réservoir. Le conduit direct fait de préférence moins d'un mètre de long, plus préférentiellement moins de 50 cm de long.

Dans une réalisation de l'invention, la turbomachine comprend un cône avant comprenant le réservoir.

Dans une réalisation de l'invention, le réservoir est fixé dans le ou au compresseur basse pression par l'intermédiaire des deuxièmes moyens de fixation.

Dans une réalisation de l'invention, le séparateur annulaire comprend le réservoir. Le réservoir peut être fixé au séparateur annulaire par les deuxièmes moyens de fixation.

Dans une réalisation de l'invention, le réservoir est fixé à ou dans une nacelle de la turbomachine par les deuxièmes moyens de fixation

Dans une réalisation de l'invention, la turbomachine comprend une soufflante et en ce que la première sortie de pulvérisation est située entre cette dernière et le compresseur basse pression. Cela permet au nettoyage d'être particulièrement efficace car le liquide aqueux est injecté directement à proximité du compresseur basse pression. Cela évite toute réverbération du liquide de nettoyage sur la soufflante.

Dans une réalisation de l'invention, le pulvérisateur comprend une deuxième sortie de pulvérisation située entre l'entrée de la turbomachine et le compresseur basse pression dans le deuxième passage pour y injecter le liquide aqueux. Cela permet de nettoyer les surfaces du deuxième passage, c'est-à-dire les surfaces du flux secondaire. Cela permet aussi d'injecter du liquide dans le flux secondaire pour aider à la propulsion.

Dans une réalisation de l'invention, le réservoir est connecté fluidiquement à un système de dégivrage du séparateur annulaire ou du compresseur basse pression.

Dans une réalisation de l'invention, le réservoir est connecté fluidiquement à un système de récupération pour récupérer du liquide aqueux entre le compresseur basse pression et la sortie. Cela permet de diminuer la quantité de liquide aqueux et donc son poids.

Dans une réalisation de l'invention, le réservoir est agencé pour récupérer de l'eau de condensation pendant le vol de l'aéronef.

Dans une réalisation de l'invention, le moyen de chauffage comprend un circuit d'eau pour récupérer de la chaleur générée par la turbomachine.

Dans une réalisation de l'invention, le système de propulsion pour aéronef comprend en outre au moins une deuxième turbomachine et un deuxième pulvérisateur de liquide aqueux situé dans la deuxième turbomachine et connecté de manière fluidique au réservoir.

La deuxième turbomachine est préférentiellement similaire à la première. En outre, les éléments du système de propulsion fixés à la deuxième turbomachine y sont préférentiellement fixés de la même façon que les éléments semblables sont fixés à la première turbomachine.

Le système de propulsion ne comprend préférentiellement qu'une seule unité de contrôle permettant de contrôler un débit de liquide aqueux dans chacun des pulvérisateurs.

Dans une réalisation de l'invention, l'aéronef comprend un autre système de propulsion qui comprend:
- une autre turbomachine double flux comprenant :
   ∘ une autre entrée pour recevoir de l'air,
   ∘ une autre sortie pour expulser de l'air,
   ∘ un autre séparateur annulaire pour obtenir entre l'autre entrée et l'autre sortie un autre premier passage pour un autre flux primaire d'air et un autre deuxième passage concentrique externe à l'autre premier passage pour un autre flux secondaire d'air, et
   ∘ un autre compresseur basse pression situé dans l'autre premier passage pour comprimer l'autre flux primaire d'air;
- un autre pulvérisateur de liquide aqueux comprenant une autre première sortie de pulvérisation située entre l'autre entrée de la turbomachine et l'autre compresseur basse pression dans l'autre premier passage pour y injecter un liquide aqueux;
- des autres premiers moyens de fixation fixant l'autre pulvérisateur à l'intérieur de l'autre turbomachine ;
- un autre réservoir pour contenir le liquide aqueux et logé et fixé dans l'aéronef;
- des autres deuxièmes moyens de fixation fixant l'autre réservoir dans l'aéronef; et
- une autre conduite connectant de manière fluidique l'autre réservoir à l'autre pulvérisateur.

En d'autres termes, l'autre système de propulsion, qui peut être appelé deuxième système de propulsion, est similaire au premier système de propulsion excepté pour l'unité de contrôle. En effet, l'unité de contrôle du premier système de propulsion peut être aussi agencée pour contrôler un débit de fluide aqueux pulvérisé par l'autre pulvérisateur. Il est aussi possible que le deuxième système de propulsion comprenne une deuxième unité de contrôle, agencée pour contrôler un débit de fluide aqueux pulvérisé par l'autre pulvérisateur, qui peut être totalement ou partiellement indépendante de l'unité de contrôle du premier système de propulsion.

L'utilisation d'un deuxième système de propulsion ayant son propre réservoir, appelé "autre réservoir", permet que chacun des réservoirs soit proche de la turbomachine pour laquelle il stocke du liquide aqueux. Cela réduit donc la longueur des tuyaux d'acheminement de liquide.

Dans une réalisation de l'invention, l'unité de contrôle est fixée à l'aéronef par des troisièmes moyens de fixation.

Préférentiellement, l'unité de contrôle comprend une commande située dans le poste de pilotage de l'aéronef agencée pour générer une pulvérisation par le pulvérisateur. Cela permet d'actionner le nettoyage par pulvérisateur depuis le poste de pilotage.

Selon un deuxième aspect, l'invention propose une méthode de nettoyage de turbomachine d'aéronef comprenant les étapes de:
- fournir un aéronef selon l'invention,
- fournir un liquide aqueux dans le réservoir,
- allumer la turbomachine, et
- injecter du liquide aqueux dans la turbomachine grâce au pulvérisateur.

Cela permet de nettoyer rapidement et efficacement la turbomachine et notamment son compresseur basse pression.

L'injection de liquide aqueux est actionnée via l'unité de contrôle, par exemple depuis le poste de pilotage.

L'invention se rapport également à une utilisation de cette méthode de nettoyage pendant un période de roulage de l'aéronef.

La période de roulage, parfois appelée taxiing, est la phase précédant le décollage et suivant l'atterrissage pendant laquelle l'aéronef se déplace au sol en utilisant sa turbomachine. Nettoyer la turbomachine pendant cette période fait gagner beaucoup de temps par rapport à un nettoyage lorsque l'aéronef est à l'arrêt.

Selon un troisième aspect, l'invention propose une méthode de dégivrage de turbomachine d'aéronef comprenant les étapes de:
- fournir un aéronef selon l'invention,
- fournir un liquide de dégivrage dans le réservoir,
- allumer la turbomachine, et
- injecter du liquide de dégivrage dans la turbomachine grâce au pulvérisateur.

Un "liquide de dégivrage" peut être tout liquide apte à aider au dégivrage des éléments de la turbomachine. L'injection de liquide de dégivrage est actionnée via l'unité de contrôle, par exemple depuis le poste de pilotage.

Les avantages mentionnés pour le dispositif s'appliquent mutatis mutandis aux méthodes.

### Brève description des figures

D'autres caractéristiques et avantages de l'invention apparaîtront à la lecture de la description détaillée qui suit pour la compréhension de laquelle on se reportera aux figures annexées parmi lesquelles :

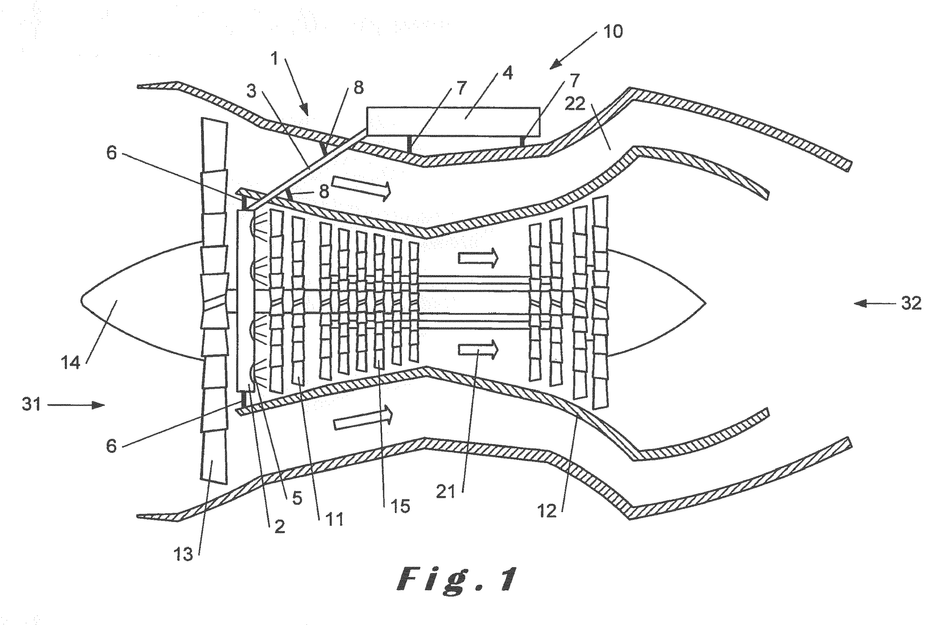

- la figure 1 est une vue en coupe illustrant des éléments d'un système de propulsion pour aéronef dans une réalisation de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

La figure 1 est une vue en coupe illustrant des éléments d'un système de propulsion pour aéronef dans une réalisation de l'invention. Le système de propulsion comprend une turbomachine 10 qui inclut notamment : une entrée d'air 31, un cône avant 14, une soufflante 13, un séparateur annulaire 12, un compresseur basse pression 11, un compresseur haute pression 15 et une sortie d'air 32. Le séparateur annulaire 12 sépare un premier passage 21 pour un flux d'air primaire d'un deuxième passage 22 pour un flux d'air secondaire, le deuxième passage 22 étant concentrique externe au premier passage. Le séparateur annulaire 12 est préférentiellement annulaire.

Le système de propulsion comprend en outre un pulvérisateur 2 qui est logé dans l'aéronef et fixé à l'aéronef par des premiers moyens de fixation 6, un réservoir 4 qui est logé dans l'aéronef et fixé à l'aéronef par des deuxièmes moyens de fixation 7 et une conduite 3 qui est logée dans l'aéronef et fixé à l'aéronef par des quatrièmes moyens de fixation 8.

La conduite 3 permet à un liquide aqueux de passer du réservoir 4 au pulvérisateur 2.

Le système de propulsion comprend en outre une unité de contrôle, préférentiellement fixée à l'aéronef par des troisièmes moyens de fixation, et permettant de contrôler le débit de liquide aqueux pulvérisé par le pulvérisateur.

Le pulvérisateur 2 comprend une première sortie de pulvérisation 5 reliée fluidiquement au réservoir 4 par la conduite 3 et orientées pour envoyer le liquide aqueux dans le compresseur basse pression 11. La première sortie de pulvérisation 5 permet d'injecter du liquide aqueux dans le premier passage 21.

Le pulvérisateur 2 est fixé dans l'aéronef par des deuxièmes moyens de fixation 6. Le pulvérisateur 2 peut par exemple être fixé au séparateur annulaire 12. Le pulvérisateur 2 peut comprendre un élément incluant la première sortie de pulvérisation 5 ayant une forme globalement circulaire ou globalement en étoile. Le pulvérisateur 2 peut comprendre une deuxième sortie de pulvérisation située entre l'entrée 31 et le compresseur basse pression 11, dans le deuxième passage 22, pour injecter le liquide aqueux dans le deuxième passage 22.

Le réservoir 4, la conduite 3 et le pulvérisateur 2 sont compris dans un ensemble de nettoyage 1 selon la présente invention. Cet ensemble de nettoyage 1 comprend préférentiellement l'unité de contrôle.

La turbomachine 10 est logée dans une nacelle de l'aéronef.

Dans une réalisation de l'invention, le liquide aqueux permet de dégivrer les éléments avec lesquels il rentre en contact. Il comprend alors préférentiellement un liquide de dégivrage.

Dans une réalisation de l'invention, le réservoir 4 est au moins partiellement alimenté par un système de dégivrage du séparateur annulaire 12 ou d'un système de dégivrage du compresseur basse pression 11. Le couplage entre le système de dégivrage et le réservoir 4 peut par exemple se faire par une vanne trois voies et/ou par un système venturi.

Dans une réalisation de l'invention, le réservoir 4 est au moins partiellement alimenté par un système de récupération de liquide agencé pour récupérer du liquide aqueux en aval du compresseur basse pression 11. Ce système de récupération de liquide peut être entre le compresseur basse pression 11 et le compresseur haute pression 15, ou en aval du compresseur haute pression 15. Ce système de récupération de liquide peut comprendre un système VBV (Variable Bleed Vane), par exemple disposé entre le compresseur basse pression 11 et le compresseur haute pression 15. Ce système de récupération de liquide peut comprendre un système de condensation. Dans une réalisation de l'invention, le liquide aqueux tourne en circuit fermé grâce à ce système de récupération de liquide.

Dans une réalisation de l'invention, le liquide aqueux est chauffé par la turbomachine 10, par exemple via un circuit d'eau permettant de récupérer de la chaleur générée par la turbomachine 10. Cela permet d'améliorer le nettoyage et de refroidir la turbomachine 10. En particulier, le liquide aqueux peut être chauffé par un système d'air injecté ou par un circuit de circulation autour de la turbomachine 10.

La turbomachine 10 peut par exemple être disposée sur un fuselage d'un aéronef, dans un fuselage d'un aéronef, sur une aile d'un aéronef, sous une aile d'un aéronef ou dans l'aile d'un aéronef.

Dans une réalisation de l'invention, le réservoir 4 est muni d'un système de purge, par exemple un système de purge similaire à celui des réservoirs de carburants permettant de vider le réservoir 4 par une sortie de réservoir autre que le pulvérisateur 2. Ce système de purge peut par exemple permettre de réduire la masse de l'aéronef en vol.

Dans une réalisation de l'invention, plusieurs turbomachines d'un aéronef sont munies d'un pulvérisateur de liquide aqueux connecté fluidiquement au même réservoir 4. Préférentiellement, chaque pulvérisateur de liquide aqueux est agencé de la façon décrite ci-dessus et connecté au réservoir 4 par sa propre conduite et chaque conduite est agencée de la façon décrite ci-dessus. Cela peut être le cas dans un quadrimoteur par exemple.

En d'autres termes, l'invention se rapporte à un système de propulsion pour aéronef. Le système de propulsion comprend une turbomachine, un pulvérisateur, un réservoir, une conduite reliant le réservoir au pulvérisateur et une unité de contrôle du débit de liquide dans le pulvérisateur. La turbomachine, le pulvérisateur, le réservoir, la conduite et l'unité de contrôle sont fixés à l'aéronef.

Le système de propulsion peut permettre le nettoyage d'au moins certaines parties de la turbomachine.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Aéronef comprenant un système de propulsion qui comprend:
• une turbomachine (10) double flux comprenant :
∘ une entrée (31) pour recevoir de l'air,
∘ une sortie (32) pour expulser de l'air,
∘ un séparateur annulaire (12) pour obtenir entre l'entrée (31) et la sortie (32) un premier passage (21) pour un flux primaire d'air et un deuxième passage (22) concentrique externe au premier passage (21) pour un flux secondaire d'air, et
∘ un compresseur basse pression (11) situé dans le premier passage (21) pour comprimer le flux primaire d'air;
• un pulvérisateur (2) de liquide aqueux comprenant une première sortie de pulvérisation (5) située entre l'entrée (31) de la turbomachine (10) et le compresseur basse pression (11) dans le premier passage (21) pour y injecter un liquide aqueux;
• des premiers moyens de fixation (6) fixant le pulvérisateur (2) à l'intérieur de la turbomachine (10) ;
• un réservoir (4) pour contenir le liquide aqueux et logé et fixé dans l'aéronef;
• des deuxièmes moyens de fixation (7) fixant le réservoir (4) dans l'aéronef;
• une conduite (3) connectant de manière fluidique le réservoir (4) au pulvérisateur (2); et
• une unité de contrôle pour contrôler un débit de fluide aqueux pulvérisé par le pulvérisateur (2)
**caractérisé en ce qu'**il comprend un moyen de chauffage pour chauffer le liquide aqueux dans la turbomachine (10).

2. Aéronef selon la revendication 1, **caractérisé en ce que** le réservoir (4) est connecté fluidiquement, de préférence par un conduit direct, à une entrée agencée pour permettre une introduction de liquide aqueux depuis l'extérieur de l'aéronef.

3. Aéronef selon l'une quelconque des revendications précédentes, **caractérisé en ce que** le réservoir (4) est: compris dans le séparateur annulaire (12), est compris dans un cône avant (14) de la turbomachine (10), est fixé dans le compresseur basse pression (11) par l'intermédiaire des deuxièmes moyens de fixation (7) ou est fixé dans une nacelle de la turbomachine (10) par les deuxièmes moyens de fixation (7).

4. Aéronef selon l'une quelconque des revendications précédentes, **caractérisé en ce que** la turbomachine comprend une soufflante (13) située entre l'entrée (31) de la turbomachine (10) et le compresseur basse pression (11) et **en ce que** la première sortie de pulvérisation (5) est située entre ladite soufflante (13) et le compresseur basse pression (11).

5. Aéronef selon l'une quelconque des revendications précédentes, **caractérisé en ce que** le pulvérisateur (2) comprend une deuxième sortie de pulvérisation située entre l'entrée (31) de la turbomachine (10) et le compresseur basse pression (11) dans le deuxième passage (22) pour y injecter le liquide aqueux.

6. Aéronef selon l'une quelconque des revendications précédentes, **caractérisé en ce que** le réservoir (4) est connecté fluidiquement à un système de dégivrage du séparateur annulaire (12) ou du compresseur basse pression (11).

7. Aéronef selon l'une quelconque des revendications précédentes, **caractérisé en ce que** le réservoir (4) est connecté fluidiquement à un système de récupération pour récupérer du liquide aqueux entre le compresseur basse pression (11) et la sortie (32).

8. Aéronef selon la revendication 1, **caractérisé en ce que** le moyen de chauffage comprend un circuit d'eau pour récupérer de la chaleur générée par la turbomachine (10).

9. Aéronef selon l'une quelconque des revendications précédentes, comprenant en outre au moins une deuxième turbomachine et un deuxième pulvérisateur de liquide aqueux situé dans la deuxième turbomachine et connecté de manière fluidique au réservoir (4).

10. Aéronef selon l'une quelconque des revendications 1 à 8, comprenant un autre système de propulsion qui comprend:
• une autre turbomachine double flux comprenant :
∘ une autre entrée pour recevoir de l'air,
∘ une autre sortie pour expulser de l'air,
∘ un autre séparateur annulaire pour obtenir entre l'autre entrée et l'autre sortie un autre premier passage pour un autre flux primaire d'air et un autre deuxième passage concentrique externe à l'autre premier passage pour un autre flux secondaire d'air, et
∘ un autre compresseur basse pression situé dans l'autre premier passage pour comprimer l'autre flux primaire d'air;
• un autre pulvérisateur de liquide aqueux comprenant une autre première sortie de pulvérisation située entre l'autre entrée de la turbomachine et l'autre compresseur basse pression dans l'autre premier passage pour y injecter un liquide aqueux;
• des autres premiers moyens de fixation fixant l'autre pulvérisateur à l'intérieur de l'autre turbomachine ;
• un autre réservoir pour contenir le liquide aqueux et logé et fixé dans l'aéronef;
• des autres deuxièmes moyens de fixation fixant l'autre réservoir dans l'aéronef; et
• une autre conduite connectant de manière fluidique l'autre réservoir à l'autre pulvérisateur.

11. Aéronef selon l'une quelconque des revendications précédentes, **caractérisé en ce que** l'unité de contrôle est fixée à l'aéronef par des troisièmes moyens de fixation.

12. Méthode de nettoyage de turbomachine (10) d'aéronef comprenant les étapes de:
• fournir un aéronef selon l'une quelconque des revendications précédentes,
• fournir un liquide aqueux dans le réservoir (4),
• allumer la turbomachine (10), et
• injecter du liquide aqueux dans la turbomachine (10) grâce au pulvérisateur (2).

13. Utilisation de la méthode de nettoyage selon la revendication précédente pendant une période de roulage de l'aéronef.

14. Méthode de dégivrage de turbomachine (10) d'aéronef comprenant les étapes de:
• fournir un aéronef selon l'une quelconque des revendications 1 à 11,
• fournir un liquide de dégivrage dans le réservoir (4),
• allumer la turbomachine (10), et
• injecter du liquide de dégivrage dans la turbomachine (10) grâce au pulvérisateur (2).

## Patentansprüche

1. Luftfahrzeug, umfassend ein Antriebssystem, das Folgendes umfasst:
• eine Doppelstrom-Turbomaschine (10), umfassend:
∘ einen Einlass (31) zur Aufnahme von Luft,
∘ einen Auslass (32) zum Ausstoß von Luft,
∘ eine ringförmige Trennvorrichtung (12), um zwischen dem Einlass (31) und dem Auslass (32) einen ersten Durchgang (21) für einen Kernluftstrom und einen zweiten, konzentrischen Durchgang (22), welcher außenseitig des ersten Durchgangs (21) gelegen ist, für einen Nebenluftstrom zu erhalten, und
∘ einen Niederdruckverdichter (11), der sich in dem ersten Durchgang (21) befindet, um den Kernluftstrom zu verdichten;
• eine Sprühvorrichtung (2) für eine wässrige Flüssigkeit, die einen ersten Sprühauslass (5) umfasst, welcher sich zwischen dem Einlass (31) der Turbomaschine (10) und dem Niederdruckverdichter (11) in dem ersten Durchgang (21) befindet, um dort eine wässrige Flüssigkeit einzuspritzen;
• erste Befestigungsmittel (6), welche die Sprühvorrichtung (2) im Inneren der Turbomaschine (10) befestigen;
• einen Vorratsbehälter (4), der die wässrige Flüssigkeit enthält und in dem Luftfahrzeug untergebracht und befestigt ist;
• zweite Befestigungsmittel (7), die den Vorratsbehälter (4) in dem Luftfahrzeug befestigen;
• eine Leitung (3), die eine Strömungsverbindung zwischen dem Vorratsbehälter (4) und der Sprühvorrichtung (2) herstellt; und
• eine Steuereinheit, um eine Flussrate des wässrigen Fluids zu steuern, welches von der Sprühvorrichtung (2) versprüht wird
**dadurch gekennzeichnet, dass** es ein Heizmittel zum Erwärmen der wässrigen Flüssigkeit in der Turbomaschine (10) umfasst.

2. Luftfahrzeug nach Anspruch 1, **dadurch gekennzeichnet, dass** der Vorratsbehälter (4), vorzugsweise mittels einer direkten Leitung, mit einem Einlass in Strömungsverbindung steht, welcher derart angeordnet ist, dass er ein Einleiten von wässriger Flüssigkeit von außerhalb des Luftfahrzeugs ermöglicht.

3. Luftfahrzeug nach einem der vorstehenden Ansprüche, **dadurch gekennzeichnet, dass** der Vorratsbehälter (4): sich in der ringförmigen Trennvorrichtung (12) befindet, sich in einem vorderen Kegel (14) der Turbomaschine (10) befindet, mit Hilfe der zweiten Befestigungsmittel (7) in dem Niederdruckverdichter (11) befestigt ist oder durch die zweiten Befestigungsmittel (7) in einer Gondel der Turbomaschine (10) befestigt ist.

4. Luftfahrzeug nach einem der vorstehenden Ansprüche, **dadurch gekennzeichnet, dass** die Turbomaschine einen Bläser (13) umfasst, der sich zwischen dem Einlass (31) der Turbomaschine (10) und dem Niederdruckverdichter (11) befindet, und dadurch, dass der erste Sprühauslass (5) sich zwischen dem Gebläse (13) und dem Niederdruckverdichter (11) befindet.

5. Luftfahrzeug nach einem der vorstehenden Ansprüche, **dadurch gekennzeichnet, dass** die Sprühvorrichtung (2) einen zweiten Sprühauslass umfasst, der sich zwischen dem Einlass (31) der Turbomaschine (10) und dem Niederdruckverdichter (11) in dem zweiten Durchgang (22) befindet, um dort die wässrige Flüssigkeit einzuspritzen.

6. Luftfahrzeug nach einem der vorstehenden Ansprüche, **dadurch gekennzeichnet, dass** der Vorratsbehälter (4) in Strömungsverbindung mit einem Enteisungssystem der ringförmigen Trennvorrichtung (12) oder des Niederdruckverdichters (11) steht.

7. Luftfahrzeug nach einem der vorstehenden Ansprüche, **dadurch gekennzeichnet, dass** der Vorratsbehälter (4) in Strömungsverbindung mit einem Rückgewinnungssystem zur Rückgewinnung der wässrigen Flüssigkeit zwischen dem Niederdruckverdichter (11) und dem Auslass (32) steht.

8. Luftfahrzeug nach Anspruch 1, **dadurch gekennzeichnet, dass** das Heizmittel einen Wasserkreislauf umfasst, um die Wärme zurückzugewinnen, welche von der Turbomaschine (10) erzeugt wird.

9. Luftfahrzeug nach einem der vorstehenden Ansprüche, wobei es darüber hinaus mindestens eine zweite Turbomaschine sowie eine zweite Sprühvorrichtung für eine wässrige Flüssigkeit umfasst, die sich in der zweiten Turbomaschine befindet und in Strömungsverbindung mit dem Vorratsbehälter (4) steht.

10. Luftfahrzeug nach einem der Ansprüche 1 bis 8, umfassend ein weiteres Antriebsystem, das Folgendes umfasst:
• eine weitere Doppelstrom-Turbomaschine, umfassend:
∘ einen weiteren Einlass zur Aufnahme von Luft,
∘ einen weiteren Auslass zum Ausstoß von Luft,
∘ eine weitere ringförmige Trennvorrichtung, um zwischen dem weiteren Einlass und dem weiteren Auslass einen weiteren ersten Durchgang für einen weiteren Kernluftstrom und einen weiteren zweiten, konzentrischen Durchgang, welcher außenseitig des weiteren ersten Durchgangs gelegen ist, für einen weiteren Nebenluftstrom zu erhalten, und
∘ einen weiteren Niederdruckverdichter, der sich in dem weiteren ersten Durchgang befindet, um den weiteren Kernluftstrom zu verdichten;
• eine weitere Sprühvorrichtung für eine wässrige Flüssigkeit, die einen weiteren ersten Sprühauslass umfasst, welcher sich zwischen dem weiteren Einlass der Turbomaschine und dem weiteren Niederdruckverdichter in dem weiteren ersten Durchgang befindet, um dort eine wässrige Flüssigkeit einzuspritzen;
• weitere erste Befestigungsmittel, welche die weitere Sprühvorrichtung im Inneren der weiteren Turbomaschine befestigen;
• einen weiteren Vorratsbehälter, der die wässrige Flüssigkeit enthält und in dem Luftfahrzeug untergebracht und befestigt ist;
• weitere zweite Befestigungsmittel, die den weiteren Vorratsbehälter in dem Luftfahrzeug befestigen; und
• eine weitere Leitung, die eine Strömungsverbindung zwischen dem weiteren Vorratsbehälter und der weiteren Sprühvorrichtung herstellt.

11. Luftfahrzeug nach einem der vorstehenden Ansprüche, **dadurch gekennzeichnet, dass** die Steuereinheit durch dritte Befestigungsmittel an dem Luftfahrzeug befestigt ist.

12. Verfahren zum Reinigen einer Turbomaschine (10) eines Luftfahrzeugs, das die folgenden Schritte umfasst:
• Bereitstellen eines Luftfahrzeugs nach einem der vorstehenden Ansprüche,
• Bereitstellen einer wässrigen Flüssigkeit in dem Vorratsbehälter (4),
• Zünden der Turbomaschine (10), und
• Einspritzen der wässrigen Flüssigkeit in die Turbomaschine (10) mittels der Sprühvorrichtung (2).

13. Anwendung des Reinigungsverfahrens nach dem vorstehenden Anspruch während eines Rollzeitraums des Luftfahrzeugs.

14. Verfahren zum Enteisen einer Turbomaschine (10) eines Luftfahrzeugs, das die folgenden Schritte umfasst:
• Bereitstellen eines Luftfahrzeugs nach einem der Ansprüche 1 bis 11,
• Bereitstellen einer Enteisungsflüssigkeit in dem Vorratsbehälter (4),
• Zünden der Turbomaschine (10), und
• Einspritzen der Enteisungsflüssigkeit in die Turbomaschine (10) mittels der Sprühvorrichtung (2).

## Claims

1. Aircraft comprising a propulsion system which comprises:
• a bypass turbine engine (10) comprising:
∘ an inlet (31) for receiving air,
∘ an outlet (32) for expelling air,
∘ an annular separator (12) for obtaining between the inlet (31) and the outlet (32), a first passage (21) for a primary air stream and a second concentric passage (22) external to the first passage (21) for a secondary air stream, and
∘ a low-pressure compressor (11) situated in the first passage (21) to compress the primary air stream;
• an aqueous liquid sprayer (2) comprising a first spraying outlet (5) situated between the inlet (31) of the turbine engine (10) and the low-pressure compressor (11) in the first passage (21) to inject an aqueous liquid therein;
• first fixing means (6) fixing the sprayer (2) to the inside of the turbine engine (10);
• a tank (4) for containing the aqueous liquid and being housed and fixed in the aircraft;
• second fixing means (7) fixing the tank (4) in the aircraft;
• a pipe (3) fluidically connecting the tank (4) to the sprayer (2); and
• a control unit for controlling an aqueous fluid flow sprayed by the sprayer (2),
**characterised in that** it comprises a heating means for heating the aqueous liquid in the turbine engine (10).

2. Aircraft according to claim 1, **characterised in that** the tank (4) is fluidically connected, preferably by a direct duct, to an inlet arranged to allow an introduction of aqueous liquid from the outside of the aircraft.

3. Aircraft according to any one of the preceding claims, **characterised in that** the tank (4) is: comprised in the annular separator (12), is comprised in a front cone (14) of the turbine engine (10), is fixed in the low-pressure compressor (11) by way of the second fixing means (7) or is fixed in a nacelle of the turbine engine (10) by the second fixing means (7).

4. Aircraft according to any one of the preceding claims, **characterised in that** the turbine engine comprises a fan (13) situated between the inlet (31) of the turbine engine (10) and the low-pressure compressor (11) and **in that** the first spraying outlet (5) is situated between said fan (13) and the low-pressure compressor (11).

5. Aircraft according to any one of the preceding claims, **characterised in that** the sprayer (2) comprises a second spraying outlet situated between the inlet (31) of the turbine engine (10) and the low-pressure compressor (11) in the second passage (22) to inject the aqueous liquid therein.

6. Aircraft according to any one of the preceding claims, **characterised in that** the tank (4) is fluidically connected to a system for defrosting the annular separator (12) or the low-pressure compressor (11).

7. Aircraft according to any one of the preceding claims, **characterised in that** the tank (4) is fluidically connected to a recovery system for recovering the aqueous liquid between the low-pressure compressor (11) and the outlet (32).

8. Aircraft according to claim 1, **characterised in that** the heating means comprises a water circuit for recovering the heat generated by the turbine engine (10).

9. Aircraft according to any one of the preceding claims, further comprising at least one second turbine engine and a second aqueous liquid sprayer situated in the second turbine engine and fluidically connected to the tank (4).

10. Aircraft according to any one of claims 1 to 8, comprising another propulsion system which comprises:
• another bypass turbine engine comprising:
∘ another inlet for receiving air,
∘ another outlet for expelling air,
∘ another annular separator for obtaining between the other inlet and the other outlet, another first passage for another primary air stream and another second concentric passage external to the other first passage for another secondary air stream, and
∘ another low-pressure compressor situated in the other first passage for compressing the other primary air stream;
• another aqueous liquid sprayer comprising another first spraying outlet situated between the other inlet of the turbine engine and the other low-pressure compressor in the other first passage to inject an aqueous liquid therein;
• other first fixing means fixing the other sprayer to the inside of the other turbine engine;
• another tank for containing the aqueous liquid and being housed and fixed in the aircraft;
• other second fixing means fixing the other tank in the aircraft; and
• another pipe fluidically connecting the other tank to the other sprayer.

11. Aircraft according to any one of the preceding claims, **characterised in that** the control unit is fixed to the aircraft by third fixing means.

12. Method for cleaning an aircraft turbine engine (10) comprising steps of:
• providing an aircraft according to any one of the preceding claims,
• providing an aqueous liquid in the tank (4),
• switching on the turbine engine (10), and
• injecting aqueous liquid in the turbine engine (10) thanks to the sprayer (2).

13. Use of the cleaning method according to the preceding claim for a period of driving the aircraft.

14. Method for defrosting the aircraft turbine engine (10) comprising steps of:
• providing an aircraft according to any one of claims 1 to 11,
• providing a defrosting liquid in the tank (4),
• switching on the turbine engine (10), and
• injecting defrosting liquid in the turbine engine (10) thanks to the sprayer (2).
